# EUROPÄISCHE PATENTSCHRIFT

(11) **EP 0 978 913 B1**
(45) Veröffentlichungstag und Bekanntmachung des Hinweises auf die Patenterteilung: **14.04.2010**
(21) Anmeldenummer: 98114674.9
(22) Anmeldetag: 04.08.1998
(51) Int. Cl.: H02B 1/052

(54) **Klemmvorrichtung**
Mounting device
Dispositif de fixation

(43) Veröffentlichungstag der Anmeldung: 09.02.2000
(73) Patentinhaber: SIEMENS AKTIENGESELLSCHAFT, 80333 München (DE)
(72) Erfinder: Eismann, Georg, 93138 Hainsacker (DE)

(56) Entgegenhaltungen:
- EP-A- 0 326 624
- EP-A- 0 437 124
- DE-A- 4 339 785
- DE-A- 19 504 762
- FR-A- 2 463 987

## Beschreibung

Die Erfindung bezieht sich auf eine Klemmvorrichtung als Bestandteil eines auf einer Tragschiene montierbaren Gerätegehäuses mit einer Gehäuseführung zur Aufnahme der Tragschiene, wobei auf beiden Seiten der Gehäuseführung Haltenasen vorgesehen sind, die in einer Schließstellung in die Gehäuseführung derart hineinragen, daß sie die Profilrandung der Tragschiene formschlüssig umgreifen. Eine derartige Klemmvorrichtung wird insbesondere zur Befestigung eines Reiheneinbaugerätes oder eines sonstigen Schalt- oder Steuergerätes auf einer genormten Hutschiene verwendet.

Aus der DE 30 02 589 ist eine gattungsgemäße Klemmvorrichtung bekannt. Bei der bekannten Klemmvorrichtung ist eine Haltenase einstückig an das Gerätegehäuse angeformt. Eine dieser Haltenase gegenüberliegende zweite Haltenase ist Bestandteil eines Schiebers, welcher in Querrichtung zur Tragschiene am Gerätegehäuse verschiebbar geführt ist. Durch Verschieben des Schiebers wird die damit verbundene Haltenase aus der für die Tragschiene vorgesehenen Gehäuseführung entfernt. Zur Abnahme des Gerätegehäuses von der Tragschiene wird das Gerätegehäuse daraufhin gegenüber der Tragschiene verkippt. Zum Lösen der Verbindung zwischen der Tragschiene und der gehäusefesten Haltenase ist schließlich eine Querverschiebung des Gerätegehäuses bezüglich der Tragschiene erforderlich. Das Lösen des Gerätegehäuses von der ortsfest montierten Tragschiene ist aufgrund der erforderlichen Gehäusebewegungen mit einem vergleichsweise hohen Raumbedarf verbunden. Dies ist insbesondere von Nachteil, da derartige Gerätegehäuse üblicherweise in Verteilerschränken oder dergleichen montiert werden und hierbei häufig beengte Raumverhältnisse vorherrschen. Aus diesem Grund ist eine Klemmvorrichtung wünschenswert, nach deren öffnender Betätigung das Gerätegehäuse vertikal bezüglich der Tragschiene abhebbar ist.

Eine derartige Klemmvorrichtung ist aus der DE 38 25 647 bekannt. Bei der dortigen Klemmvorrichtung sind beide Haltenasen mittels Schiebern quer zur Tragschiene am Gerätegehäuse verschiebbar geführt. Ein vertikales Abheben des Gerätegehäuses ist nach der öffnenden Betätigung beider Schieber zwar möglich, jedoch muß hierzu das Gerätegehäuse von beiden Gehäusequerseiten zugänglich sein. Ein Abheben des Gerätegehäuses ist auch nach dem Lösen eines einzelnen Schiebers möglich. Dies erfordert jedoch wiederum eine Querbewegung des Gerätegehäuses. Aufgrund der Mehrteiligkeit der bekannten Klemmvorrichtung ist diese zudem vergleichsweise aufwendig zu realisieren. Ein weiterer Nachteil der bekannten Klemmvorrichtung liegt darin, daß die Schieber in einem vergleichsweise großen Abstand zur Gehäuseführung für die Tragschiene am Gerätegehäuse gehalten sind. Die Schieber müssen daher in Schließstellung die bei einer Verdrehung des Gerätegehäuses bezüglich der Tragschiene auftretenden Torsionskräfte aufnehmen. Die Schieber sind demnach entsprechend stabil und dadurch aufwendig zu gestalten, um einen Bruch der Klemmvorrichtung zu verhindern.

Aus der DE 19504762 A1 ist eine Entriegelungsvorrichtung für eine Rastbefestigung von Installationsgeräten auf Tragschienen bekannt. Verwendet wird ein Spreizbügel an der Unterseite eines Isolierstoffgehäuses, dessen Bügelrücken zum Entriegeln nach oben gezogen wird und dadurch mit seinen beiden Bügelenden gleichzeitig und gegenläufig Spreizfüße der Rastbefestigung von den äußeren Flanschkanten der Tragschiene abdrückt.

Der Erfindung liegt daher die Aufgabe zugrunde, eine einfach aufgebaute Klemmvorrichtung anzugeben, die ein Abheben des Gehäuses von der Tragschiene mit geringem Aufwand und geringem Platzbedarf ermöglicht.

Diese Aufgabe wird erfindungsgemäß gelöst durch die Merkmale des Patentanspruchs 1. Danach sind von beiden Seiten in die Gehäuseführung hineinragende Haltenasen vorgesehen, die mittels eines gemeinsamen Schiebers in eine aus der Gehäuseführung zurückgezogene Öffnungsstellung verfahrbar sind.

Mittels der erfinderischen Klemmvorrichtung wird eine besonders einfache Entfernung des Gerätegehäuses von der Tragschiene ermöglicht. Da nach der Betätigung des gemeinsamen Schiebers die Tragschiene locker in der Gehäuseführung einliegt, und das Gerätegehäuse vertikal bezüglich der Tragschiene abgehoben werden kann.

Erfindungsgemäß sind die Haltenasen einstückig an den Schieber angeformt. Dies gewährleistet einerseits eine hohe Stabilität der Klemmvorrichtung. Andererseits wird infolge der einstückigen Ausführung des Schiebers und der Haltenasen der Herstellungsaufwand für das mit der Klemmvorrichtung versehene Gerätegehäuse reduziert.

Erfindungsgemäß umfaßt die Klemmvorrichtung eine elastisch verformbare Haltenase, die am Gerätegehäuse derart widergelagert ist, daß die Haltenase bei einer öffnenden Betätigung des Schiebers aus der Gehäuseführung herausgebogen wird. Infolge der verbiegbaren Haltenase wird auf besonders einfache Weise eine Bewegungsumlenkung der Haltenase bezüglich der Schieberbewegung erzielt. Insbesondere sind hierfür keine aufwendig zu montierenden Gelenke erforderlich. Die Elastizität der Haltenase wird in vorteilhafter Weise zur Erzeugung einer Rückstellkraft ausgenützt, welche der öffnenden Betätigung des Schiebers entgegenwirkt. Die Ruhestellung der Klemmvorrichtung ist somit deren Schließstellung, wodurch ein versehentliches Öffnen der Klemmverbindung zwischen dem Gerätegehäuse und der Tragschiene wirksam verhindert ist.

Eine verformbare Haltenase mit den vorangehend beschriebenen Eigenschaften ist besonders platzsparend realisiert, indem die Haltenase nach Art einer Biegungsfeder, z.B. einer Stabfeder, gestaltet ist, deren Biegungsebene sich parallel zur Ebene des Schiebers erstreckt.

Zweckmäßigerweise umfaßt die Klemmvorrichtung eine formstabile und somit starre Haltenase, welche die Tragschiene in Schließstellung von 3 Seiten formschlüssig umfaßt. Diese Haltenase beaufschlagt die Tragschiene zusätzlich mit einer in Querrichtung wirkenden Kraftkomponente, wodurch das Gerätegehäuse in Längsrichtung der Tragschiene reibschlüssig an dieser fixiert ist. Vorteilhafterweise ist die formstabile Haltenase an der dem Gerätegehäuse abgewandten Seite mit einer Einführschräge versehen. Diese Einführschräge vereinfacht das Aufstecken des Gerätegehäuses, zumal die Tragschiene unter dem Aufsteckdruck selbsttätig in die Klemmvorrichtung einrastet.

In einer vorteilhaften Weiterbildung der Erfindung ist der Schieber mit einem Rasthebel versehen, mittels dessen der Schieber in Öffnungsstellung gehalten wird. Dies vereinfacht die Abnahme des Gerätegehäuses von der Tragschiene, da das Entriegeln der Klemmvorrichtung und das Abnehmen des Gerätegehäuses zeitlich getrennt erfolgen können.

Mittels korrespondierender Anschläge des Schiebers und des Gehäuses, die den Verfahrweg des Schiebers in Richtung seiner Öffnungsstellung begrenzen, wird eine Überbeanspruchung des Schiebers und eine Überbiegung der verformbaren Haltenase verhindert.

Eine im Betätigungsende des Schiebers vorgesehene Öffnung zum Ansetzen eines Betätigungshebels vereinfacht die öffnende Betätigung der Klemmvorrichtung.

Die mit der Erfindung erzielten Vorteile bestehen insbesondere darin, daß durch eine einseitige Betätigung des Schiebers die Tragschiene an beiden Querseiten zugleich entriegelt wird. Von besonderem Vorteil ist hierbei die Kombination einer elastisch verformbaren Haltenase an der dem Betätigungsende des Schiebers abgewandten Seite der Gehäuseführung und einer formstabilen Haltenase an der dem Betätigungsende zugewandten Seite.

Nachfolgend wird ein Ausführungsbeispiel der Erfindung anhand einer Zeichnung näher erläutert. Dabei zeigen:
- FIG 1: in Draufsicht eine Klemmvorrichtung als Bestandteil eines Gerätegehäuses in Schließstellung,
- FIG 2: eine Seitenansicht entlang II der Klemmvorrichtung gemäß FIG 1,
- FIG 3: in Draufsicht die Klemmvorrichtung gemäß FIG 1 in Öffnungsstellung, und
- FIG 4: in Seitenansicht gemäß FIG 2 die Klemmvorrichtung in Öffnungsstellung.

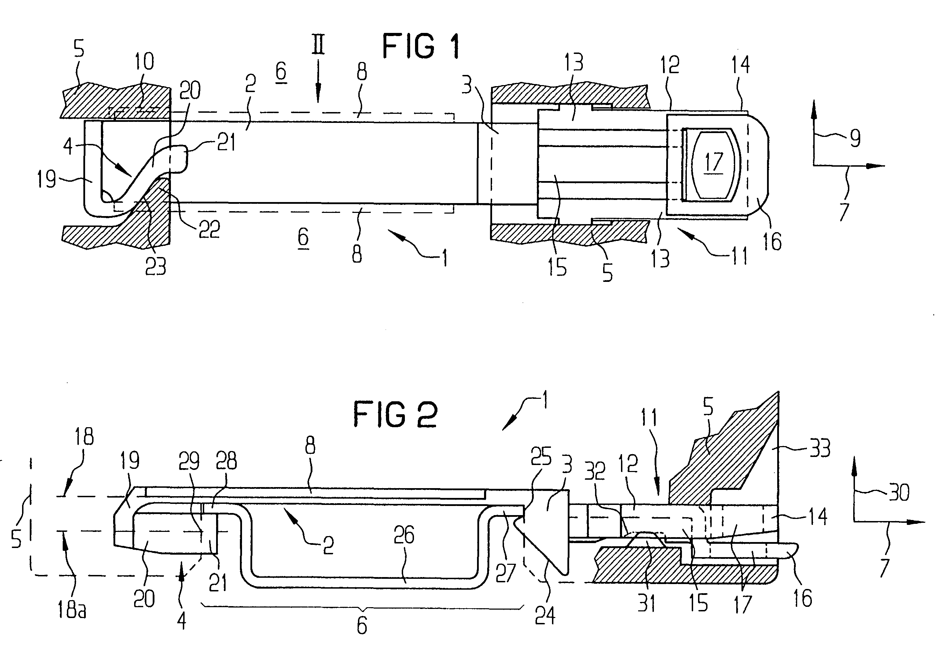

Die in FIG 1 dargestellte Klemmvorrichtung 1 umfaßt einen Schieber 2 mit zwei einstückig mit diesem ausgeführten Haltenasen 3 und 4. Der Schieber 2 ist an der Unterseite eines hier nur in Teilen dargestellten Gerätegehäuses 5 derart angeordnet, daß er eine Gehäuseführung 6 für eine hier nicht dargestellte Tragschiene in deren Querrichtung 7 beidseitig übersteht. In der dargestellten Schließstellung der Klemmvorrichtung 1 ragen dabei die Haltenasen 3 und 4 von in Querrichtung 7 entgegengesetzten Seiten in die Gehäuseführung 6 hinein. Zwischen den Haltenasen 3,4 - und somit bezüglich des Gerätegehäuses 5 im Bereich der Gehäuseführung 6 - ist der Schieber mit Führungsleisten 8 versehen. Die Führungsleisten 8 überstehen beide Seitenkanten des Schiebers 2 in der zur Querrichtung 7 senkrechten Längsrichtung 9 und werden von Führungsnuten 10 des Gerätegehäuses 5 formschlüssig umfaßt. Der Schieber 2 ist dadurch in Querrichtung 7 verschiebbar am Gerätegehäuse 5 geführt. Der Schieber 2 ist an der der Gehäuseführung 6 abgewandten Seite der Haltenase 3 zu einem Betätigungsende 11 verlängert.

Das Betätigungsende 11 umfaßt einen starren Zugrahmen 12 mit zwei in Querrichtung 7 verlaufenden Streben 13, die in einem Betätigungskopf 14 abschließen. Das Betätigungsende 11 umfaßt desweiteren einen zwischen den Streben 13 geführten Rasthebel 15. Der Rasthebel 15 ist im Bereich des Betätigungskopfes 14 zu einer Drucktaste 16 verbreitert, die parallel zum Betätigungskopf 14 verläuft, und diesen in Querrichtung 7 leicht überragt. Der Betätigungskopf 14 und die Drucktaste 16 sind dabei mit fluchtenden Öffnungen 17 versehen, die zum Ansetzen eines Betätigungshebels, z.B. eines Schraubendrehers, dienen.

Wie insbesondere aus einer Zusammenschau von FIG 1 und FIG 2 zu erkennen ist, ist die Haltenase 4 aus einem senkrecht zur Ebene 18 des Schiebers 2 auf diesen aufgesetzten Materialstreifen gebildet, der einen Auflageteil 19, einen Federarm 20 und einen Haltekopf 21 umfaßt. Dabei ist die Haltenase 4 mit dem in Längsrichtung 9 verlaufenden Auflageteil 19 einstückig an dem dem Betätigungsende 11 entgegengesetzten Ende des Schiebers 2 einstückig angeformt ist. An den Auflageteil 19 schließt der Federarm 20 an, der vom Auflageteil 19 etwa rechtwinklig abgewinkelt ist und mit einer gestreckten S-Form in Richtung des Betätigungsendes 11 geschwungen ist. Der Federarm 20 verläuft dabei mit geringem Abstand zum Schieber 2 in einer zur Ebene 18 parallelen Biegeebene 18a und ist an dessen Freiende zu dem Haltekopf 21 verbreitert, der zentriert bezüglich des Schiebers 2 in Querrichtung 7 weist und in der dargestellten Schließstellung nach Art eines Riegels in die Gehäuseführung 6 hineinragt. Die Haltenase 4 ist im Bereich ihres Federarms 20 elastisch verformbar ausgebildet und wirkt nach Art einer einseitig eingespannten Biegungsfeder. Als Widerlager für die verformbare Haltenase 4 dient ein Gehäusevorsprung 22, der in Längsrichtung 9 in den Bereich des Schiebers 2 hineinragt, und mit einer abgeschrägten Seitenwand 23 den Federarm 20 in Schließstellung mit Vorspannung außenseitig beaufschlagt.

Die der Haltenase 4 gegenüberliegende Haltenase 3 ist formstabil ausgeführt. An ihrer der Ebene 18 des Schiebers 2 abgewandten Seite ist die Haltenase 3 zur Bildung einer Einführschräge 24 zur Gehäuseführung 6 hin abgeschrägt. Zwischen dieser Einführschräge 24 und dem Schieber 2 ist eine Einkerbung 25 ausgebildet. Die Haltenase 3 ist somit nach Art eines Widerhakens aufgebaut.

Die Funktionsweise der Haltenasen 3 und 4 ist anhand einer in FIG 2 dargestellten hutförmigen Tragschiene 26 verdeutlicht. Zur Fixierung des Gerätegehäuses 5 an der Tragschiene 26 ist diese in die Gehäuseführung 6 eingeführt. Dabei liegt die der Haltenase 3 zugewandte Profilrandung 27 der Tragschiene 26 formschlüssig in der Einkerbung 25 ein. Die der Haltenase 4 zugewandte Profilrandung 28 ist zwischen dem Schieber 2 und dem Haltekopf 21 der Haltenase 4 verriegelt. In Querrichtung 7 liegt die Profilrandung 28 an der Seitenwand 29 der Gehäuseführung 6 an. Somit ist die Tragschiene 26 sowohl in Querrichtung 7 als auch in Vertikalrichtung 30 formschlüssig gegen eine Relativbewegung bezüglich des Gerätegehäuses 5 gehalten. Infolge der formschlüssigen Einlage der Profilrandung 27 in der Einkerbung 25 ist die Tragschiene 26 reibschlüssig zwischen der Haltenase 3 und der gegenüberliegenden Seitenwand 29 der Gehäuseführung 6 verklemmt. Somit ist ein Verrutschen des Gerätegehäuses 5 bezüglich der Tragschiene 26 in deren Längsrichtung 9 verhindert.

In Schließstellung verlaufen der Zugrahmen 12 und der Rasthebel 15 des Betätigungsendes 11 parallel zueinander in Querrichtung 7. Ein im Bereich des Rasthebels 15 angeordneter vertikaler Vorsprung 31 des Gerätegehäuses 5 greift dabei in eine korrespondierende Einmuldung 32 des Rasthebels 15 ein. Zum Lösen der Verbindung zwischen dem Gerätegehäuse 5 und der Tragschiene 26 wird ein Betätigungshebel, z.B. ein Schraubendreher, in die Öffnung 17 des von außen zugänglichen Betätigungskopfes 14 des Zugrahmens 12 eingeschoben. Danach wird das Griffende des Betätigungshebels auf das Gerätegehäuse 5 zubewegt, wobei der Betätigungshebel an einer schräg aufgeweiteten Gehäuseöffnung 33 für das Betätigungsende 11 verkantet und nach Art eines zweiarmigen Hebels den Betätigungskopf 14 in Querrichtung 7 mit einer Zugkraft beaufschlagt.

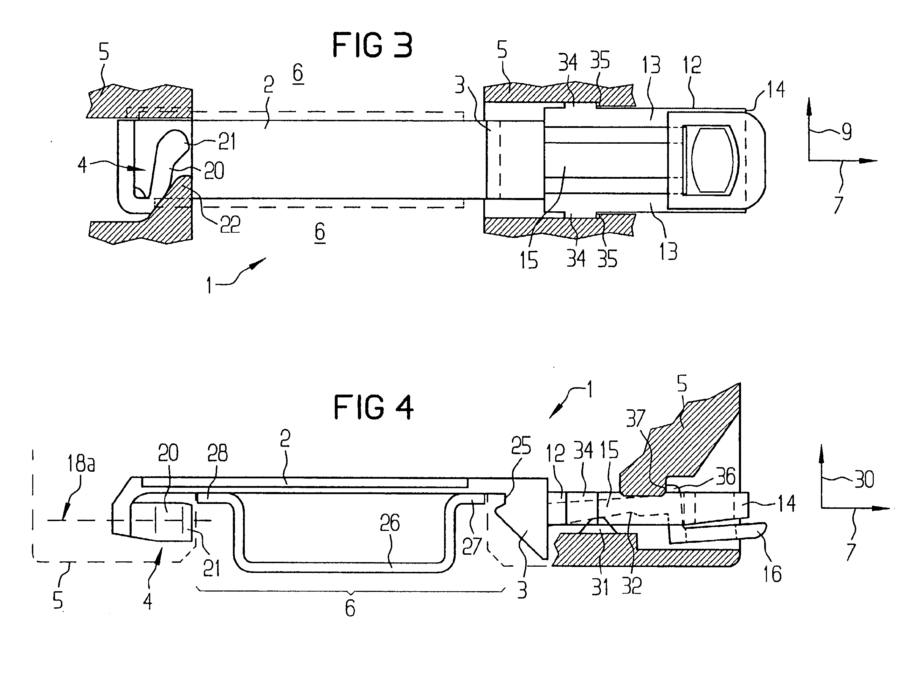

Dies bewirkt eine Verschiebung des Schiebers 2 und der mit diesem verbundenen Haltenasen 3,4 in die gemäß FIG 3 und FIG 4 dargestellte Öffnungsstellung der Klemmvorrichtung 1.

In dieser Öffnungsstellung sind beide Haltenasen 3,4 vollständig aus der Gehäuseführung 6 zurückgezogen. Dies wird bei der formstabilen Haltenase 3 dadurch erreicht, daß diese mit dem Schieber 2 mitbewegt wird. Dabei gibt die Einkerbung 25 die korrespondierende Profilrandung 27 der Tragschiene 26 in Vertikalrichtung 30 frei. Infolge der Schieberbewegung wird der Federarm 20 der verformbaren Haltenase 4 gegen den Gehäusevorsprung 22 verschoben. Dies hat zur Folge, daß der Federarm 20 entgegen der Schieberbewegung verbogen wird. Bei dieser Verbiegung des Federarms 20 wird dessen Haltekopf 21 innerhalb der Biegungsebene 18a aus der Gehäuseführung 6 herausgeschwenkt. Die Verbiegung des Federarms 20 bewirkt zusätzlich zur Entriegelung der Tragschiene 26 eine Rückstellkraft, welche der öffnenden Schieberbewegung entgegenwirkt. Der Verfahrweg des Schiebers 2 in Öffnungsrichtung wird durch beidseitig an den Streben 13 des Zugrahmens 12 angebrachte Anschläge 34 und korrespondierende Gehäuseanschläge 35 begrenzt. Auf diese Weise wird eine schädigende Überbiegung des Federarms 20 der Haltenase 4 verhindert.

Beim Öffnen der Klemmvorrichtung 1 werden die Einmuldung 32 des Rasthebels 15 und der Gehäusevorsprung 31 gegeneinander verschoben. Dadurch wird der Rasthebel 15 aus der Ebene des Zugrahmens 12 herausgebogen. In Öffnungsstellung rastet gemäß FIG 4 der Rasthebel 15 mit einer zur Einmuldung 32 entgegengesetzt und zur Drucktaste 16 hin verschobenen Rastnase 36 an einem Gehäuseanschlag 37 ein und hält somit den Schieber 2 und die Haltenasen 3,4 gegen die vom Federarm 20 verursachte Rückstellkraft in der Öffnungsstellung.

Die Tragschiene 26 liegt in Öffnungsstellung locker in der Gehäuseführung 6 ein. Das Gerätegehäuse 5 kann deshalb in Vertikalrichtung 30 von der Tragschiene 26 abgehoben werden. Durch Drücken der über den Betätigungskopf 14 des Zugrahmens 12 hinausragenden Drucktaste 16 des Rasthebels 15 wird die Rastnase 36 entriegelt. Der Schieber springt hierauf getrieben von der Rückstellkraft selbsttätig in die Schließstellung zurück.

## Patentansprüche

1. Klemmvorrichtung als Bestandteil eines auf einer Tragschiene (26) montierbaren Gerätegehäuses (5) mit einer Gehäuseführung (6) zur Aufnahme der Tragschiene (26), wobei auf beiden Seiten der Gehäuseführung (6) Haltenasen (3,4) vorgesehen sind, die in einer Schließstellung in die Gehäuseführung (6) derart hineinragen, daß sie die Profilrandung (27, 28) der Tragschiene (26) formschlüssig umgreifen und wobei mittels eines gemeinsamen Schiebers (2) jede Haltenase (3,4) in eine aus der Gehäuseführung (6) zurückgezogene Öffnungsstellung verfahrbar ist, wobei die Haltenasen (3,4) einstückig an den Schieber (2) angeformt sind und eine der Haltenasen (4) elastisch verformbar ist und bei öffnender Betätigung des Schiebers (2) aus der Gehäuseführung (6) herausgebogen wird,
**dadurch gekennzeichnet,**
**dass** die elastisch verformbare Haltenase (4) derart an einem Gehäusevorsprung (22) des Gerätegehäuses (5) widergelagert ist, daß die Haltenase (4) bei öffnender Betätigung des Schiebers (2) aus der Gehäuseführung (6) herausgebogen wird.

2. Klemmvorrichtung nach Anspruch 1, **dadurch gekennzeichnet, daß** die elastisch verformbare Haltenase (4) derart an einem Gehäusevorsprung (22) des Gerätegehäuses (5) widergelagert ist, daß die Haltenase (4) einer öffnenden Betätigung des Schiebers (2) eine Rückstellkraft entgegensetzt.

3. Klemmvorrichtung nach einem der Ansprüche 1 oder 2,
**dadurch gekennzeichnet, daß** die verformbare Haltenase (4) nach Art einer Biegungsfeder gestaltet ist, deren Biegungsebene (18a) sich parallel zur Ebene (18) des Schiebers (2) erstreckt.

4. Klemmvorrichtung nach einem der Ansprüche 1 bis 3,
**gekennzeichnet durch** eine starre Haltenase (3).

5. Klemmvorrichtung nach Anspruch 4, **dadurch gekennzeichnet, daß** die starre Haltenase (3) zur Gehäuseführung (6) hin abgeschrägt ist.

6. Klemmvorrichtung nach einem der Ansprüche 1 bis 5, **dadurch gekennzeichnet, daß** der Schieber (2) in Öffnungsstellung mittels eines Rasthebels (15) an einem Gehäuseanschlag (37) verrastet ist.

7. Klemmvorrichtung nach einem der Ansprüche 1 bis 6, **gekennzeichnet durch** korrespondierende Anschläge (34,35) des Schiebers (2) und des Gerätegehäuses (5), mittels derer der Verfahrweg des Schiebers (2) in Richtung seiner Öffnungsstellung begrenzt ist.

8. Klemmvorrichtung nach einem der Ansprüche 1 bis 7, **dadurch gekennzeichnet, daß** der Schieber (2) an dessen Betätigungsende (11) eine Öffnung (17) zum Ansetzen eines Betätigungshebels aufweist.

## Claims

1. Clamping arrangement as part of an equipment housing (5) that can be mounted on a carrier rail (26) and has a housing guide (6) for receiving the carrier rail (26), wherein there are provided on both sides of the housing guide (6) detent catches (3, 4) which in a closed position project into the housing guide (6) in such a way that they engage the profile edge (27, 28) of the carrier rail (26) in a positive locking manner and wherein each detent catch (3, 4) can be displaced by means of a common slider (2) into an open position withdrawn from the housing guide (6), wherein the detent catches (3, 4) are moulded as a single piece onto the slider (2) and one of the detent catches (4) is elastically deformable and is bent out of the housing guide (6) upon an opening actuation of the slider (2),
**characterised in that**
the elastically deformable detent catch (4) is supported on a housing projection (22) of the equipment housing (5) in such a way that the detent catch (4) is bent out of the housing guide (6) upon an opening actuation of the slider (2).

2. Clamping arrangement according to claim 1, **characterised in that** the elastically deformable detent catch (4) is supported on a housing projection (22) of the equipment housing (5) in such a way that the detent catch (4) counteracts an opening actuation of the slider (2) with a restoring force.

3. Clamping arrangement according to one of claims 1 or 2, **characterised in that** the deformable detent catch (4) is shaped in the manner of a bending spring whose bending plane (18a) extends parallel to the plane (18) of the slider (2) .

4. Clamping arrangement according to one of claims 1 to 3, **characterised by** a rigid detent catch (3).

5. Clamping arrangement according to claim 4, **characterised in that** the rigid detent catch (3) is bevelled towards the housing guide (6).

6. Clamping arrangement according to one of claims 1 to 5, **characterised in that** in the open position the slider (2) is locked in place by means of a detent lever (15) at a housing stop (37).

7. Clamping arrangement according to one of claims 1 to 6,
**characterised by** corresponding stops (34, 35) of the slider (2) and the equipment housing (5) by means of which the displacement path of the slider (2) is delimited in the direction of its open position.

8. Clamping arrangement according to one of claims 1 to 7, **characterised in that** at its actuation end (11) the slider (2) has an opening (17) for attaching an actuating lever.

## Revendications

1. Dispositif de serrage en tant que composant d'un boîtier d'appareil (5) pouvant être monté sur un rail porteur (26) et comprenant un guidage de boîtier (6) pour loger le rail porteur (26), des ergots de retenue (3, 4) étant prévus des deux côtés du guidage de boîtier (6), lesquels ergots, dans une position de fermeture, font saillie de manière telle dans le guidage de boîtier (6) qu'ils enserrent le bord du profilé (27, 28) du rail de porteur (26) par conjugaison de forme, et chaque ergot de retenue (3, 4) pouvant être déplacé au moyen d'un coulisseau commun (2) pour prendre une position d'ouverture en retrait par rapport au guidage de boîtier (6), les ergots de retenue (3, 4) étant formés d'une seule pièce sur le coulisseau (2) et l'un des ergots de retenue (4) étant déformable élastiquement et, lors de l'actionnement d'ouverture du coulisseau (2), se plie hors du guidage de boîtier (6),
**caractérisé en ce que**
l'ergot de retenue (4) déformable élastiquement est en butée contre une saillie (22) du boîtier d'appareil (5) de manière telle que l'ergot de retenue (4), lors de l'actionnement d'ouverture du coulisseau (2), se plie hors du guidage de boîtier (6).

2. Dispositif de serrage selon la revendication 1,
**caractérisé en ce que** l'ergot de retenue déformable élastiquement (4) est en butée contre une saillie (22) du boîtier d'appareil (5) de manière telle que l'ergot de retenue (4) oppose une force de rappel à un actionnement d'ouverture du coulisseau (2).

3. Dispositif de serrage selon l'une des revendications 1 ou 2, **caractérisé en ce que** l'ergot de retenue déformable (4) est réalisé à l'instar d'un ressort de flexion dont le plan de flexion (18a) s'étend parallèlement au plan (18) du coulisseau (2).

4. Dispositif de serrage selon l'une des revendications 1 à 3, **caractérisé par** un ergot de retenue rigide (3).

5. Dispositif de serrage selon la revendication 4,
**caractérisé en ce que** l'ergot de retenue rigide (3) est biseauté en direction du guidage de boîtier (6).

6. Dispositif de serrage selon l'une des revendications 1 à 5, **caractérisé en ce que** le coulisseau (2) est enclenché en position d'ouverture au moyen d'un levier d'enclenchement (15) sur une butée du boîtier (37).

7. Dispositif de serrage selon l'une des revendications 1 à 6, **caractérisé par** des butées correspondantes (34, 35) du coulisseau (2) et du boîtier d'appareil (5), au moyen desquelles la course du coulisseau (2) en direction de sa position d'ouverture est limitée.

8. Dispositif de serrage selon l'une des revendications 1 à 7, **caractérisé en ce que** le coulisseau (2) comporte, en son extrémité d'actionnement (11), une ouverture (17) pour la pose d'un levier d'actionnement.
